(19) **Europäisches Patentamt**
**European Patent Office**
**Office européen des brevets**

(11) **EP 4 529 637 B1**

(12) **EUROPEAN PATENT SPECIFICATION**

(45) Date of publication and mention
of the grant of the patent:
**17.06.2026 Bulletin 2026/25**

(21) Application number: **23772053.7**

(22) Date of filing: **17.08.2023**

(51) International Patent Classification (IPC):
**G06F 12/0802** (2016.01)     **G06F 12/0897** (2016.01)
**G06T 1/20** (2006.01)     **G06T 1/60** (2006.01)
**G06T 3/00** (2024.01)

(52) Cooperative Patent Classification (CPC):
**G06T 1/60; G06F 12/0842; G06F 12/0846;
G06F 12/0888; G06T 3/18;** G06F 2212/1016;
G06F 2212/1032; G06F 2212/455

(86) International application number:
**PCT/US2023/072385**

(87) International publication number:
**WO 2025/038117 (20.02.2025 Gazette 2025/08)**

(54) **CACHE-OPTIMIZED WARP ENGINES**

CACHE-OPTIMIERTE WARPINGPROZESSOREN

MOTEURS DE DÉFORMATION À OPTIMISATION DU CACHE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**02.04.2025 Bulletin 2025/14**

(73) Proprietor: **GOOGLE LLC**
**Mountain View CA 94043 (US)**

(72) Inventors:
• **Wang, Dong**
**Mountain View, California 94043 (US)**
• **Lai, Chi-Chun**
**Mountain View, California 94043 (US)**

(74) Representative: **Marks & Clerk GST**
**1 New York Street**
**Manchester M1 4HD (GB)**

(56) References cited:
**WO-A1-2020/239211     US-A1- 2015 077 426**
**US-A1- 2018 260 931**

• **YOUNG-GEUN KIM ET AL: "System-on-Chip
Solution of Video Stabilization for CMOS Image
Sensors in Hand-Held Devices", IEEE
TRANSACTIONS ON CIRCUITS AND SYSTEMS
FOR VIDEO TECHNOLOGY, IEEE, USA, vol. 21,
no. 10, 1 October 2011 (2011-10-01), pages 1401 -
1414, XP011361150, ISSN: 1051-8215, DOI:
10.1109/TCSVT.2011.2162764**

**Description**

**BACKGROUND**

Many computing devices may include a camera for taking photographs and videos. Mobile computing devices (e.g., smartphones, tablets) are often smaller in physical size and may not have space for large lenses or image sensors, which are important for gathering light for better images or videos. Accordingly, many mobile computing devices may include an image-processing unit, or a central-processing unit, configured to provide computational photography features (e.g., light enhancements, blur reduction, distortion correction). Some mobile computing devices may include a warp engine configured to enhance images or videos through lens distortion correction, motion compensation, electronic image stabilization, rolling shutter correction, and so forth. Many warp engines may utilize cache memories to provide these enhancements.

Unfortunately, however, some warp engines may utilize cache memories in an unoptimized fashion through tile-based image processing, which may include dividing a warped input image into tiles (e.g., a grid of portions) that are smaller than the warped input image. The warp engines may scan pixels within a tile by following an unoptimized coordinate sequence. Scanning the pixels may include loading pixel information (e.g., location, color, gamma) associated with the pixels from a system memory (e.g., random-access memory (RAM)) of a computing device. Portions of the warped input image may be loaded into a cache memory for processing subsequent pixels. However, by utilizing the unoptimized coordinate sequence, the cache memory may be larger than necessary, which increases a size and reduces power efficiency of the computing device. YOUNG-GEUN KIM ET AL: "System-on-Chip Solution of Video Stabilization for CMOS Image Sensors in Hand-Held Devices", IEEE TRANSACTIONS ON CIRCUITS AND SYSTEMS FOR VIDEO TECHNOLOGY, describes cache based optimization techniques to meet the requirement of memory bandwidth and computational time for iterative parameter estimation and final output image interpolation. US 2015/007426 A1 describes an image optimized rolling cache system that extracts pixel information and address information of a corresponding pixel from an input image to store the extracted pixel information and the extracted address information, and processes the image by applying a vertical rolling mechanism or a horizontal rolling mechanism using the stored information. US 2018/260931 describes a method for providing improved cache structures and methods that are optimally sized to support a predetermined range of late stage adjustments and in which image data is intelligently read out of DRAM and cached in such a way as to eliminate re-fetching of input image data from DRAM and minimize DRAM bandwidth and power. WO 2020/239211 A1 describes an electronic device comprising: a main memory for storing a current image, wherein the current image comprises a plurality of pixels, including a plurality of support pixels; a cache memory for storing a plurality of portions of the current image in a corresponding plurality of sectors of the cache memory, wherein each sector comprises a subset of the plurality of pixels stored in the main memory; and a processing circuitry configured to generate a distortion-compensated image on the basis of the current image using an image distortion model and the plurality of portions of the current image stored in the corresponding plurality of sectors of the cache memory, wherein the image distortion model defines for each of the plurality of support pixels a mapping between a position in the current image and a position in the distortion-compensated image, wherein in the distortion-compensated image the plurality of support pixels define a plurality of horizontal rows of pixels and a plurality of vertical columns of pixels. The processing circuitry is further configured to determine on the basis of the image distortion model one or more positions of one or more of the plurality of support pixels in the current image and to select the plurality of portions of the current image for storing in the corresponding plurality of sectors of the cache memory on the basis of the one or more positions of the one or more support pixels in the current image.

**SUMMARY**

Aspects of the present disclosure are as set out in the accompanying claims. This document describes systems and techniques directed at cache-optimized warp engines (COWEs). In aspects, a computing device having a first cache memory, a second cache memory, a system memory, and a COWE is configured to receive a warped input image comprising a plurality of pixel information. The COWE may receive the warped input image from a camera or the system memory of the computing device. The first cache memory may be a level 1 (L1) cache and include access times that are 100 times faster than that of the system memory. The second cache memory may be a level 2 (L2) cache or a system-level cache (SLC) and include access times that are 10 times faster than that of the system memory.

Following a coordinate sequence, the COWE may scan the plurality of pixel information and load a first portion of the pixel information into the first cache memory and a second portion of the pixel information into the second cache memory. The COWE may scan the plurality of pixel information by loading a memory access unit (MAU) of pixel information from the system memory into the first cache memory or the second cache memory. The first portion of the pixel information may include MAUs having pixel information that may be accessed more frequently by the COWE than the second portion of the pixel information stored in the second cache memory.

Based on the first and second portions of the plurality of pixel information, the COWE may determine first and second portions, respectively, of a plurality of pixel information of a corrected output image. The COWE may utilize a transformation model (e.g., translation, rotation) to first determine locations of the first and second portions of the corrected output image. The COWE may then interpolate pixel information (e.g., color, gamma) of the first and second portions of the corrected output image using any one of a variety of interpolation methods (e.g., bicubic interpolation).

The COWE may store the first and second portions of the pixel information of the corrected output image as an output image in the system memory. The first portion of the pixel information of the corrected output image may further include subsequent first portions of the corrected output image that the COWE determines based on subsequent first portions of the warped input image. Similarly, the second portion of the pixel information of the corrected output image may further include subsequent second portions of the corrected output image that the COWE determines based on subsequent second portions of the warped input image.

The details of one or more implementations are set forth in the accompanying Drawings and the following Detailed Description. Other features and advantages will be apparent from the Detailed Description, the Drawings, and the Claims. This Summary is provided to introduce subject matter that is further described in the Detailed Description. Accordingly, a reader should not consider the Summary to describe essential features or to threshold the scope of the claimed subject matter.

## BRIEF DESCRIPTION OF THE DRAWINGS

The details of one or more aspects of cache-optimized warp engines are described in this document with reference to the following Drawings. The use of same numbers in different instances throughout the Drawings may indicate similar features or components.

Fig. 1 illustrates an example environment of a computing device having a first cache memory, a second cache memory, a system memory, and a cache-optimized warp engine configured to correct a warped input image;

Fig. 2 illustrates an example implementation of the computing device from Fig. 1, which is configured to provide the cache-optimized warp engine;

Fig. 3 depicts an example method that a cache-optimized warp engine may implement;

Fig. 4 illustrates an example of a corrected output image that may be divided into rows by a cache-optimized warp engine;

Fig. 5 illustrates an example of a warped input image that a cache-optimized warp engine may process into a corrected output image;

Fig. 6 illustrates an example of a cache-optimized warp engine loading pixel information from a system memory of a computing device;

Fig. 7 illustrates various examples of memory access units that a cache-optimized warp engine may fetch from a system memory of a computing device;

Fig. 8 illustrates an example of memory access units that a cache-optimized warp engine may load into a cache memory of a computing device; and

Fig. 9 depicts an example method that a cache-optimized warp engine may implement on a warped input image to determine a corrected output image.

## DETAILED DESCRIPTION

### Overview

Computing devices (e.g., smartphones, tablets, computers) often include a camera for capturing images and videos. Larger computing devices (e.g., dedicated cameras) may include large lenses and large image sensors capable of capturing more light, which is important for capturing higher-quality images and videos. Smaller computing devices (e.g., smartphones) may not have sufficient physical space to include large lenses or image sensors and, thus, may take advantage of computational photography. In aspects, computational photography may refer to digital image or video capture and processing techniques that use digital computation rather than optical processes. These computing devices may leverage various on-board components (e.g., cameras, processors) and leverage additional sensor data to digitally compute an image. As an example, a computing device may include at least one cache memory, a system memory (e.g., dynamic random-access memory (DRAM)), and a warp engine configured to process a warped (e.g., distorted) input image into a corrected (e.g., undistorted) output image. The warp engine may access the warped input image from the system memory of the computing device, load portions of the warped input image into the cache memory, and process, utilizing the portions of the warped input image in the cache memory and other portions in the system memory, the warped input image into a corrected output image. The portions of the warped input image in the cache memory may be accessed more quickly than the other portions in the system memory, and thus the warped input image may be processed more quickly into the corrected output image.

However, cache memory can be expensive in terms of physical space and power consumption. Accordingly, warp engines that are not optimized to utilize as little cache as possible may result in physically larger and inefficient computing devices. This can be especially problematic in mobile computing devices that may be powered by batteries. For example, some warp engines may process a warped input image by dividing the warped input image into tile lines that include multiple tiles (e.g., a portion of an image). The warp engine may process the warped input image on a tile-by-tile basis by scanning pixels within a tile along a scan line that progresses from left to right, where a tile includes multiple scan lines from top to bottom. The warp engine may scan the pixels by accessing pixel information associated with pixels of a scan line from the system memory of the computing device and loading one or more scan lines of the pixel information into the cache memory. The pixel information may be a number of bits (e.g., four bits, eight bits) and include location information, color information, and/or gamma information for a given pixel. The warp engine may interpolate the pixel information to produce a corrected output pixel.

For inter-tile pixels (e.g., pixels at a border between horizontally adjacent tiles), same pixel information may be used to process a right-most pixel of a current tile and a left-most pixel of a next tile that is on a right of the current tile. For example, the warp engine may load pixel information associated with the right-most pixel of the current tile from system memory of a computing device into a first cache memory of the computing device. The pixel information may include location, color, and gamma information for the right-most pixel and proximate pixels (e.g., two, three, or four pixels in each of four cardinal directions) of the current tile. The warp engine may determine a location of a right-most corrected output pixel of a corrected output tile of a corrected output image using an arbitrary transformation function (e.g., rotation, translation, stretching). After determining the location of the right-most corrected output pixel, the warp engine may interpolate (e.g., using linear interpolation) the color and gamma information to determine color and gamma information associated with the right-most corrected output pixel of the corrected output tile of the corrected output image.

When the warp engine processes the left-most pixel of the next tile, the warp engine may access the pixel information from the first cache memory. Using the pixel information in the first cache memory, the warp engine may determine (e.g., using bicubic interpolation) pixel information (e.g., color, gamma) for a left-most corrected output pixel of a next output tile of the corrected output image. Unfortunately, however, the warp engine may not access location information for the left-most pixel of the next tile prior to loading a scan line of pixel information, so in some implementations the warp engine may store one or more scan lines of pixel information in the first cache memory. Thus, the first cache memory must be at least as large (e.g., in bits, in bytes) as the one or more scan lines of pixel information.

Alternatively, cache-optimized warp engines (COWEs) may process pixel information using rows (e.g., tile lines) rather than tiles. A row may include a portion of a warped input image that is as wide as the warped input image (e.g., in number of pixels) and as tall as an integer division (e.g., a tenth) of the warped input image. Said differently, COWEs may process warped input images on a row-by-row basis by scanning pixels following an intra-row coordinate sequence that is from bottom to top and left to right within a row. Scanning pixels may include fetching pixel information (e.g., color, gamma) stored in a system memory or cache (e.g., if previously fetched) of a computing device. COWEs may then follow the intra-row coordinate sequence for subsequent rows (e.g., rows that are below, rows that are above).

This document describes systems and techniques directed at COWEs. The disclosed systems and techniques may address shortcomings of cache-unoptimized warp engines that may increase sizes and decrease battery lives of mobile computing devices. The conflict between these shortcomings may be addressed by the disclosed systems and techniques, which may provide COWEs, reduce cache sizes, and improve battery life of mobile computing devices.

The following discussion describes operating environments, techniques that may be employed in the operating environments, example devices, and example methods. Although systems and techniques for cache-optimized warp engines are described, it is to be understood that the subject of the appended Claims is not necessarily limited to the specific features or methods described. Rather, the specific features and methods are disclosed as example implementations, reference to which is made by way of example only.

**Example Operating Environment**

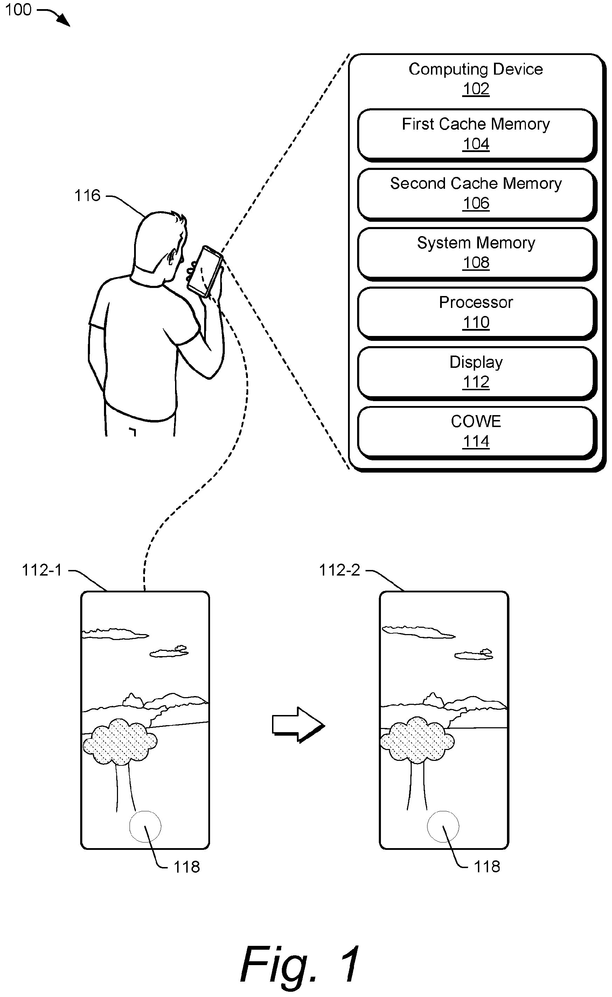

Fig. 1 illustrates an example environment 100 of a computing device 102 that includes a first cache memory 104, a second cache memory 106, system memory 108, a processor 110, and a display 112. The first cache memory 104 may be a level 1 (L1) cache associated with the processor 110. The second cache memory 106 may be a level 2 (L2) cache associated with the processor 110. Alternatively, at least one of the first cache memory 104 or the second cache memory 106 may be a system-level cache (SLC) associated with the processor 110, a motherboard (not illustrated), or another appropriate printed circuit board (PCB) with the computing device 102. The SLC may be a shared cache between the processor 110 and various peripherals or components (e.g., displays, graphics processing units (GPUs), audio codecs) of the computing device 102.

The system memory 108 may be realized as any one of a variety of volatile memories, including random-access memory (RAM), dynamic random-access memory (DRAM), synchronized dynamic random-access memory (SDRAM), or the like. Alternatively or additionally, the system memory 108 may be realized as any one of a variety of non-volatile memories, including flash memory (e.g., solid-state drives (SSDs)), read-only memory (ROM), magnetic computer storage devices (e.g., hard disk drives (HDDs), floppy disks, magnetic tape), optical discs (e.g., compact discs (CDs), digital video discs (DVDs)), and so forth. The system memory 108 may be operably coupled (e.g., electrically, physically, optically) with one or more components of the computing device 102.

The processor 110 may be realized as any one of a variety of single-core or multi-core processors, including central processing units (CPUs), graphics processing units (GPUs), arithmetic logic units (ALUs), reduced instruction set computer (RISC) microprocessors, advanced RISC machine (ARM) microprocessors, and so forth. The processor 110 may utilize the first cache memory 104, the second cache memory 106, and the system memory 108 to provide some or all of the features described herein. The processor 110 may do so by executing computer-readable instructions stored on the system memory 108.

The display 112 may be realized as any one of a variety of displays, including a liquid crystal display (LCD), a light-emitting diode (LED) display, an organic light-emitting diode (OLED) display, an active-matrix organic light-emitting diode (AMOLED) display, a twisted nematic (TN) display, an in-plane switching (IPS) display, and so forth. Further, the display 112 may be a display module that includes a stack of layers, including a display, a touchscreen, a digitizer, a display driver integrated circuit (DDIC), a protective cover layer (e.g., glass, plastic), and so forth. The display 112 may be included in a housing of the computing device 102 or altogether separate from the computing device 102. The display 112 may be used to show content (e.g., images, videos) and/or a graphical user interface (GUI) to users of the computing device 102.

Fig. 1 further illustrates that the computing device 102 includes a cache-optimized warp engine 114 (COWE 114). The COWE 114 may be realized as a standalone peripheral or component (e.g., an image processing unit (IPU)) having dedicated cache memory, or alternatively and as described above, the processor 110 may execute computer-readable instructions stored on the system memory 108 to provide the COWE 114 (e.g., as a software component). The COWE 114 may utilize the first cache memory 104, the second cache memory 106, the system memory 108, and the processor 110 to process a warped input image into a corrected output image.

An input image may be warped for any one of a number of reasons, including lens distortion (e.g., barrel distortion, pincushion distortion), rolling shutter correction, geometric transformation (e.g., translational, rotational, Euclidean, affine, projective), motion compensation, electronic image stabilization (EIS), and so forth. The COWE 114 may process an input image warped by lens distortion into a corrected output image by utilizing a predetermined transformation function that is based on a specific shape and material of a camera lens. For example, a manufacturer of computing devices having a camera may take an average or median measurement of curvature and material makeup of a sample of lenses to predetermine the transformation function. The COWE 114 may similarly process an input image warped by rolling shutter correction into a corrected output image. The COWE 114 may process an input image warped by geometric transformation, motion compensation, or EIS by utilizing sensor data (e.g., accelerometer data). The COWE 114 may determine an arbitrary transformation function based on the sensor data to process the warped input image into a corrected output image.

Fig. 1 further illustrates a user 116 of the computing device 102 having the COWE 114. In the example environment 100, the user 116 wishes to capture a photograph of a scene that includes a tree in a foreground and a mountain range in a background. As illustrated by the display 112-1, the scene is rotationally warped in this example and may be referred to as a warped input image. Although rotational warping is illustrated in Fig. 1 by the display 112-1, the warped input image may be warped by any number of image distortions, including barrel distortion, pincushion distortion, perspective distortion, skew, curved horizon distortion, panorama distortion, a combination distortion (e.g., a complex distortion), and so forth. A specific image distortion may be caused by a lens of a camera, an unsteady capture of an image or video, and so forth. The display 112-1 further illustrates a shutter button 118, which may be presented to the user 116 by a GUI of the computing device 102. The user 116 may tap the shutter button 118 to capture an image of the scene.

The display 112-2 illustrates that the warped input image of the scene is corrected by the COWE 114 of the computing device 102 into a corrected output image. The COWE 114 may correct the warped input image responsive to the user 116 tapping the shutter button 118. The COWE 114 may utilize the first cache memory 104, the second cache memory 106, and the system memory 108 to correct the warped input image.

As an example, the COWE 114 may receive the warped input image as a result of the user 116 tapping the shutter button 118 to capture the scene. The user 116 may have been unsteady when tapping the shutter button 118, resulting in the scene being rotationally warped into the warped input image illustrated by the display 112-1. The warped input image may include a plurality of pixel information (e.g., color, location, gamma). The COWE 114 may divide the warped input image into a number of rows (e.g., two, five, 10, 20) that are as wide as the warped input image and as tall as an integer division of the warped input image. For example, the warped input image may be 1,920 pixels wide and 1,080 pixels tall. In this example, each one of the number of rows is 1,920 pixels wide and an integer division of 1,080 pixels tall. The integer may be two, four, eight, 16, 32, and so forth, resulting in each one of the number of rows being 540 pixels, 270 pixels, 135 pixels, 68 pixels, or 34 pixels, respectively, tall.

After dividing the warped input image into the number of rows, the COWE 114 may scan, following a coordinate sequence including the number of rows, the plurality of pixel information of the warped input image. The coordinate sequence may include an intra-row coordinate sequence that progresses from bottom to top and left to right within a row and an inter-row coordinate sequence that progresses from a topmost row to bottommost row in a row-by-row fashion. The COWE 114 may scan the pixel information by accessing it from the system memory 108 in increments of memory access units (MAUs).

An MAU may be any one of an appropriate dimension, including a number of pixels tall (e.g., four, eight, 16, 32, 60) and another number of pixels wide (e.g., four, six, 10, 12), and may be measured in bits or bytes (B) (e.g., increments of eight bits). A specific dimension of the MAUs accessed by the COWE 114 may depend on specific information included in the plurality of pixel information of the warped input image and a format of the system memory 108. The specific information may include color depth (e.g., 8-bit color, 128-bit color, 256-bit color), gamma, and location information. Additionally or alternatively, the pixel information may be compressed (e.g., reducing a number of bytes of an MAU) or uncompressed (e.g., increasing a number of bytes of an MAU). The format of the system memory 108 may include a bus width (e.g., eight bits, 16 bits, 32 bits) and a clock speed.

As a specific example, using a frame bandwidth reduction (FBR) format, an MAU may be 256 B and include 256 8-bit (e.g., 1 B) pixels. In another example, not using the FBR format, an MAU may still be 256 B but include just 32 64-bit (e.g., 8 B) pixels. As yet another example, a pixel may be described by 30 bits within a 32-bit container and an associated MAU may include 48 pixels, totaling 192 B of pixel information.

Following the coordinate sequence mentioned above, the COWE 114 may load portions of the plurality of pixel information of the warped input image into the first cache memory 104, the second cache memory 106, or both. The COWE 114 may do so because the portions of the plurality of pixel information may be referenced multiple times to process pixels of the warped input image into corrected pixels of the corrected output image. Additionally, accessing pixel information from the first cache memory 104 or the second cache memory 106 may be significantly faster than accessing pixel information from the system memory 108. For example, accessing pixel information from the second cache memory 106 may be 25 times faster than accessing pixel information from the system memory 108. Similarly, accessing pixel information from the first cache memory 104 may be 100 times faster than accessing pixel information from the system memory 108.

Specifically, the COWE 114 may load a first portion of intra-row pixel information into the first cache memory 104 and a second portion of inter-row pixel information into the second cache memory 106. The first portion of pixel information may include a number of bottom-to-top scan lines (e.g., according to the coordinate sequence mentioned above) consisting of one or more MAUs, depending on a height of a row. The second portion of pixel information may include a number of MAUs that form a border between a top row and an adjacent row below the top row. The first portion of pixel information may be referenced most frequently by the COWE 114 to determine corrected output pixels, thus justifying why the first portion may be stored in the first cache memory 104, which is faster than the second cache memory 106 and the system memory 108. Similarly, the second portion of pixel information may be referenced more frequently than portions in the system memory 108 but less frequently than the first portion in the first cache memory 104.

The COWE 114 may determine, based on the first portion of pixel information in the first cache memory 104, a first corrected portion of a plurality of pixel information of the corrected output image illustrated by the display 112-2. The COWE 114 may do so by determining a transformation function from a warped input pixel location to a corresponding corrected output pixel location. The transformation function may include a predetermined function based on a curvature of a lens of a camera that captured the warped input image. Additionally or alternatively, the transformation function may be based on sensor data (e.g., accelerometer) that is captured with the warped input image. The COWE 114 may then determine the first corrected portion (e.g., color, gamma) of the plurality of pixel information for the corrected output pixel location using interpolation methods (e.g., linear interpolation, bilinear interpolation, cubic interpolation) on the first portion of pixel information in the first cache memory 104.

The COWE 114 may determine, based on the second portion of pixel information in the second cache memory 106, a second corrected portion of the plurality of pixel information of the corrected output image. The COWE 114 may similarly do so by determining a transformation function from a warped input pixel location in the second portion of pixel information to a corresponding corrected output pixel location. By performing the method described, the COWE 114 may determine remaining corrected portions of the plurality of pixel information of the corrected output image. The COWE 114 may then store the corrected output image in the system memory 108 of the computing device 102.

By following the coordinate sequence mentioned above, sizes of the first cache memory 104 and the second cache memory 106 may be optimized. Accordingly, the computing device 102 may benefit from power savings and size reduction while correcting warped input images into corrected output images. These benefits enable the computing device 102 to be physically smaller and consume less energy, improving a user experience for the user 116.

**Example Devices**

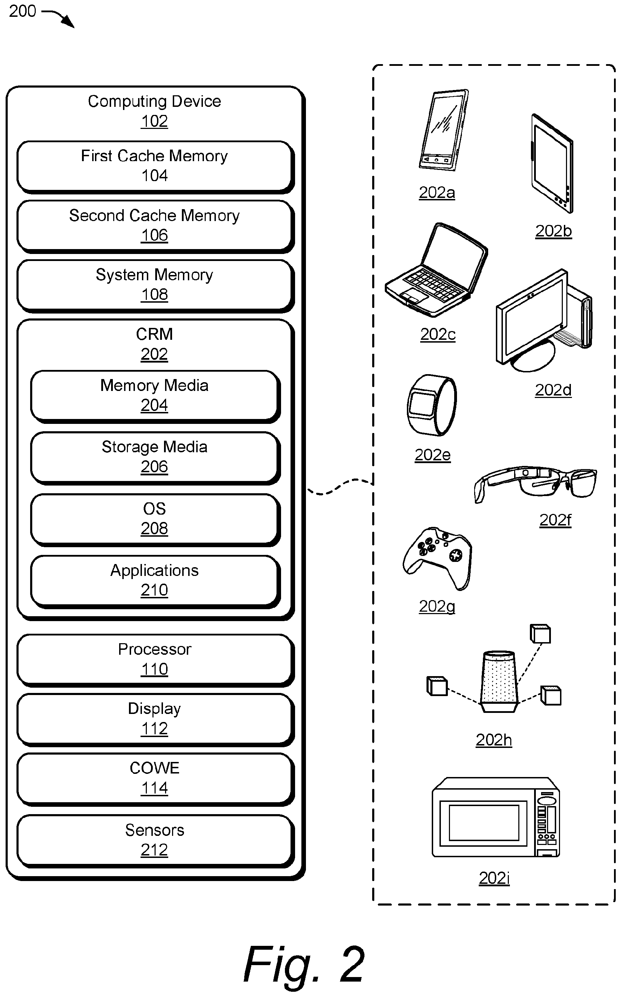

In more detail, Fig. 2 illustrates an example implementation 200 of the computing device 102 from Fig. 1, which is configured to provide the COWE 114. The computing device 102 is illustrated as various example devices. As non-limiting examples, the computing device 102 can be a smartphone 202a, a tablet 202b, a laptop 202c, a desktop 202d, a smartwatch 202e, a pair of smart glasses 202f, a game controller 202g, a smart home speaker 202h, or a microwave appliance 202i. Although not illustrated, the computing device 102 may also be implemented as a health monitoring device, a personal media device, a drone, a home appliance, a security system or device thereof, a digital photo frame, and so forth. The computing device 102 can be wearable, non-wearable but mobile, or relatively immobile. Further, the computing device 102 can be used with or embedded within many computing devices or peripherals (e.g., vehicles, personal computers). The computing device 102 may also include additional interfaces or components omitted from Fig. 2.

Fig. 2 illustrates that the computing device 102 includes various components described with reference to Fig. 1, including the first cache memory 104, the second cache memory 106, the system memory 108, the processor 110, the display 112, and the COWE 114. Fig. 2 further illustrates that the computing device 102 may include computer-readable media 202 (CRM 202), which may include memory media 204 and storage media 206. The memory media 204 may include one or more non-transitory storage devices, including RAM or DRAM. The storage media 206 may include one or more transitory storage devices, including an SSD or a magnetic spinning HDD. The CRM 202 may further include an operating system 208 (OS 208) and applications 210, which may be stored as computer-readable instructions on the CRM 202. The processor 110 can execute the computer-readable instructions on the CRM 202 to provide some or all of the functionalities described herein. Although shown as a separate component, the system memory 108 may be included in the CRM 202 as a standalone memory component, part of the memory media 204, part of the storage media 206, or part of both.

Fig. 2 also illustrates that the computing device 102 includes one or more sensors 212. The sensors 212 can include image sensors, audio sensors (e.g., microphones), accelerometers, barometers, ambient light sensors, thermometers, and so forth. One or more of the sensors 212 (e.g., an accelerometer) may be utilized by the COWE 114 to determine transformation functions. Additionally or alternatively, the COWE 114 may receive a warped input image from one or more of the sensors 212 (e.g., an image sensor, a camera). For example, the computing device 102 may be the smartphone 202a, which may include a camera or camera system (e.g., image sensor and lens).

In implementations, the COWE 114 can include one or more integrated circuits (ICs) (e.g., a power management integrated circuit (PMIC)), a system-on-a-chip (SOC), a secure key store, hardware embedded with firmware, a PCB with various hardware components (e.g., a motherboard, a daughterboard), or any combination thereof. As described herein, the COWE 114 may include one or more components of the computing device 102, as illustrated in Fig. 1 and Fig. 2, configured to determine a corrected output image based on a warped input image. In other implementations, the COWE 114 may be implemented as the computing device 102.

Although not shown, the computing device 102 can also include input/output (I/O) ports, a system bus, an interconnect, or another data transfer system that couples with various components of or within the computing device 102. As an example, the I/O ports can enable the computing device 102 to interact with other devices or users through peripheral devices, transmitting any combination of digital signals and/or analog signals via wired manners (e.g., ethernet) or wireless manners (e.g., radio). The I/O ports may include any combination of internal or external ports, including universal serial bus ports, audio ports, video ports, and so forth. Various peripheral devices (e.g., human input devices, external CRM, speakers, displays) may be coupled with the I/O ports.

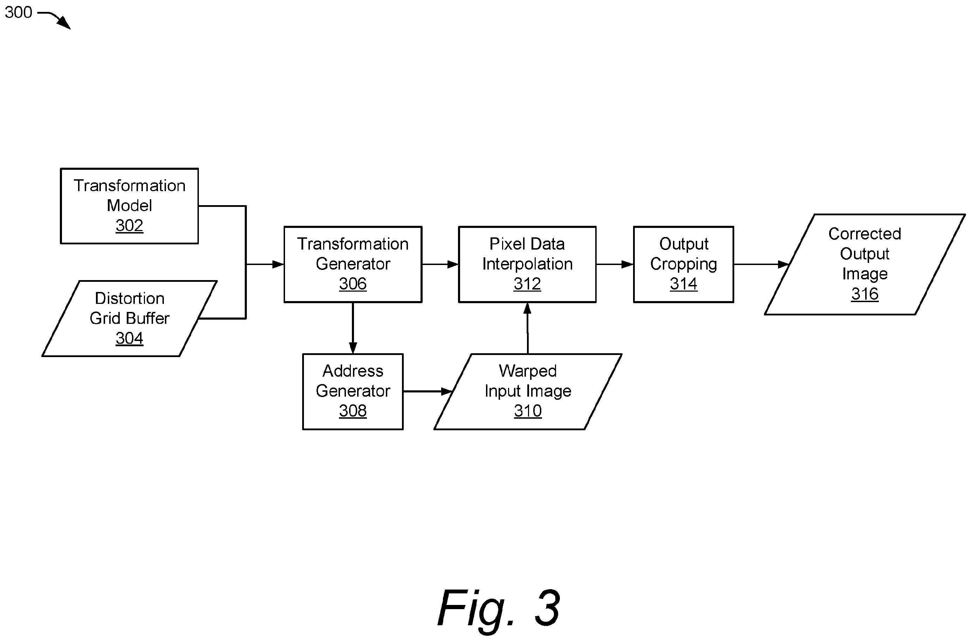

Fig. 3 depicts an example method 300 that a COWE (e.g., COWE 114 of Fig. 1 and/or Fig. 2) may implement. The example method 300 is illustrated as a flowchart with various shapes representing method steps or data (e.g., a warped input image, pixel information). The COWE is like the COWE 114 from Figs. 1 and 2, except as detailed below. Accordingly, the COWE implementing the example method 300 may be operably coupled to a first cache memory (e.g., first cache memory 104 of Fig. 1 and/or 2), a second cache memory (e.g., second cache memory 106 of Fig. 1 and/or 2), and/or system memory (e.g., system memory 108 of Fig. 1 and/or 2, CRM 202 of Fig. 2). Alternatively or additionally, the COWE implementing the example method 300 may either be a component of or realized as a computing device (e.g., computing device 102 of Fig. 1 and/or 2).

As illustrated, the example method 300 of Fig. 3 includes a transformation model 302 and a distortion grid buffer 304. The transformation model 302 may be based on a predetermined set of transformations associated with one or more camera lenses of a computing device (e.g., computing device 102). For example, a COWE of a computing device having a telephoto lens and a macrophotography lens may include a transformation associated with the telephoto lens and a transformation associated with the macrophotography lens. The transformations may be predetermined based on curvatures of the lenses and configured to correct associated lens distortions. Alternatively or additionally, the transformation model 302 may be based on accelerometer data. For example, a user (e.g., user 116 of Fig. 1) of a computing device having a camera, an accelerometer, and a COWE may take a photo of a scene. The user may be unsteady when capturing the photo, which could result in a skewed (e.g., tilted) or blurry photo. However, the accelerometer may record data usable by the COWE to correct the skewed or blurry photo.

The distortion grid buffer 304 may be based on the transformation model 302 or a subsampled distortion value on a sparse grid. The sparse grid may include neighbor pixels of a current pixel of a warped input image. The COWE may utilize the distortion grid buffer 304 to map a location (e.g., x- and y-coordinates) of the current pixel of the warped input image to a location of a pixel of a corrected output image.

The COWE performing the example method 300 may generate a transformation using a transformation generator 306. As illustrated, the COWE may utilize the transformation model 302 and the distortion grid buffer 304 as inputs to the transformation generator 306. Again, the generated transformation may be based on a predetermined transformation associated with a curvature of a camera lens or accelerometer data. The generated transformation may be usable by the COWE to map a location of a pixel of a warped input image 310 to a location of a pixel of a corrected output image 316. The transformation generated by the transformation generator 306 may be input to an address generator 308 of the COWE.

The address generator 308 may utilize the generated transformation to determine a mapping between locations of a pixel of the warped input image 310 and a pixel of the corrected output image 316. The address generator 308 may further utilize the generated transformation to determine mappings between neighbor pixels of the pixel of the warped input 310 image and neighbor pixels of the pixel of the corrected output image 316. The generated transformation and the locations, as well as associated pixel information (e.g., color, gamma), may be input to a pixel data interpolation 312.

The COWE performing the example method 300 may utilize the pixel data interpolation 312 to interpolate pixel information for pixels of the corrected output image 316. For example, the COWE may utilize any one of a variety of appropriate interpolation methods to determine color and gamma information for the pixels of the corrected output image 316. Some interpolation methods include piecewise constant interpolation, linear interpolation, bilinear interpolation, polynomial interpolation, spline interpolation, mimetic interpolation, cubic interpolation, bicubic interpolation, and so forth. A specific interpolation method may be selected by the COWE performing the method 300 based on a desired quality of the corrected output image 316 or computing capabilities of a computing device (e.g., computing device 102 of Figs. 1 and/or 2) having the COWE.

As illustrated in Fig. 3, the COWE performing the example method 300 may provide the pixel information from the pixel data interpolation 312 as input data to output cropping 314. At the output cropping 314, the COWE may crop the corrected output image 316 by trimming portions of the corrected output image 316. The COWE may trim upper portions, lower portions, left portions, or right portions of the corrected output image 316 at the output cropping 314. The COWE may determine which portions of the corrected output image 316 to crop at the output cropping 314 based on a desired aspect ratio, data size, data compression method, and so forth of the corrected output image 316.

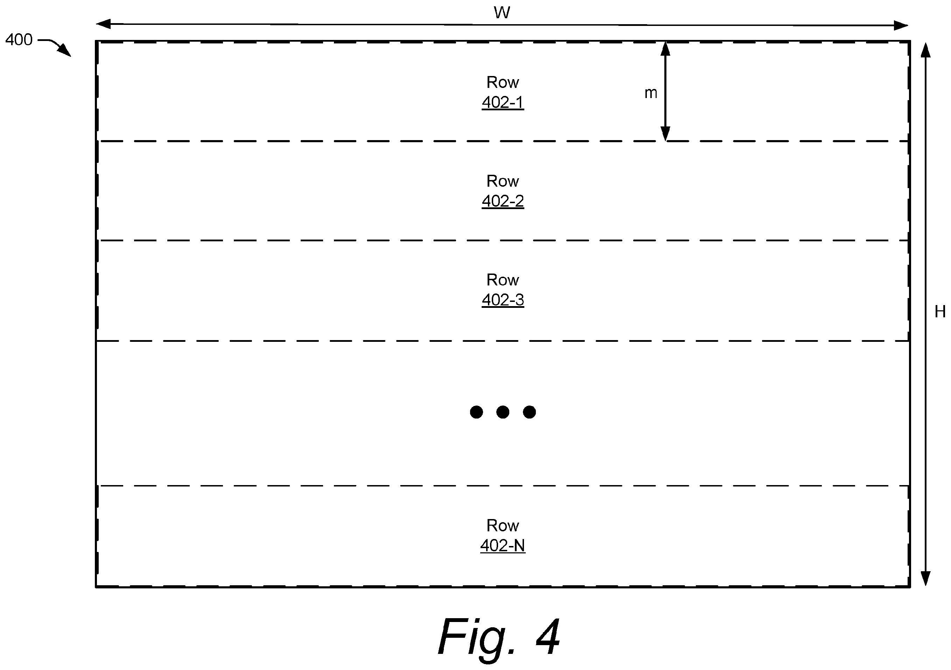

Fig. 4 illustrates an example of a corrected output image 400 (e.g., corrected output image 316 of Fig. 3) that may be divided into rows (e.g., as described with reference to Fig. 1) by a COWE (e.g., the COWE 114 of Figs. 1 and/or 2). As illustrated, the corrected output image 400 may be W pixels wide and H pixels tall. W and H may be any positive integer and depend on a desired format, data size, compression method, and so forth of the corrected output image 400. For example, W may be 1,920 pixels and H may be 1,080 pixels (e.g., a 1080p image). As another example, W may be 3,840 pixels and H may be 2,160 pixels (e.g., a 4k image).

Fig. 4 further illustrates that the corrected output image 316 is divided into rows 402. The rows 402 are as wide as the image (e.g., W pixels wide) and m pixels tall, where m is less than H and an integer division of H. For example, H may be 1,080 pixels tall and m may be 108 pixels tall (e.g., an integer division of 10). As another example, H may be 2,160 pixels tall and m may be 216 pixels tall (e.g., an integer division of 10). As an additional example, H may be a same 2,160 pixels tall and m may be 108 pixels tall (e.g., an integer division of 20). A specific integer division may be based on a desired configuration for a COWE that determines the corrected output image 316 or computing capabilities of a computing device having the COWE. Illustrated in Fig. 4, the corrected output image 400 is divided into N rows, where N is a positive integer and equal to H divided by m. For example, H may be 1,080 pixels and m may be 108 pixels, making N equal to 10.

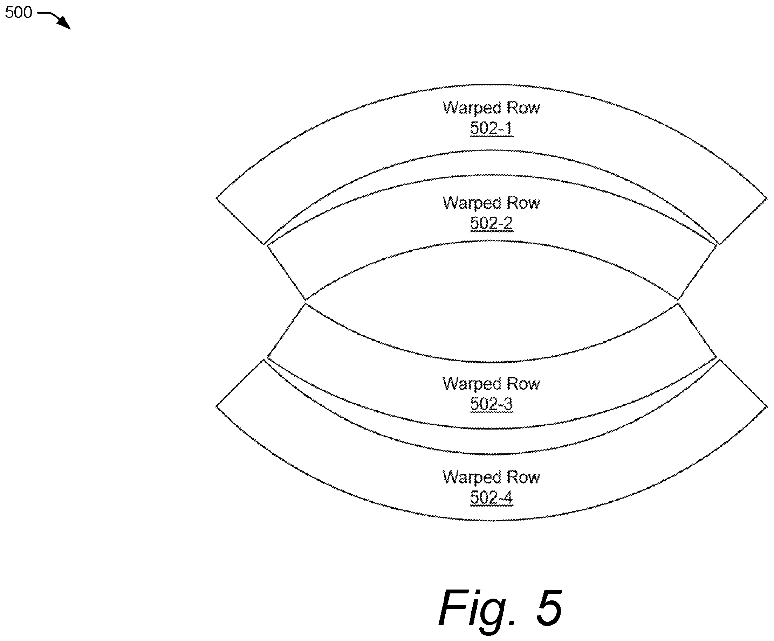

Fig. 5 illustrates an example of a warped input image 500 (e.g., warped input image 310 of Fig. 3) that a COWE may process into a corrected output image (e.g., corrected output image 316 of Figs. 3 and/or 4). Fig. 5 illustrates the warped input image 500 as four warped rows 502. Although four warped rows 502 are described, a number of rows can be any positive integer. The warped rows 502 are illustrated as a first warped row 502-1, a second warped row 502-2, a third warped row 502-3, and a fourth warped row 502-4. As illustrated, the warped rows 502 are warped in a barrel distortion manner (e.g., as a result of lens distortion). Although barrel lens distortion is illustrated, distortion of the warped input image 500 can be any distortion resulting from lens shapes or an instability during capture of the warped input image 500. Furthermore, although gaps are illustrated between each of the warped rows 502, the gaps should not be construed to represent anything beyond an arbitrary warping (e.g., barrel distortion) of an input image. Alternatively or additionally, the gaps may not be present in a warped input image or may be included in Fig. 5 and following figures for the purposes of brevity, clarity, or explanation of COWEs.

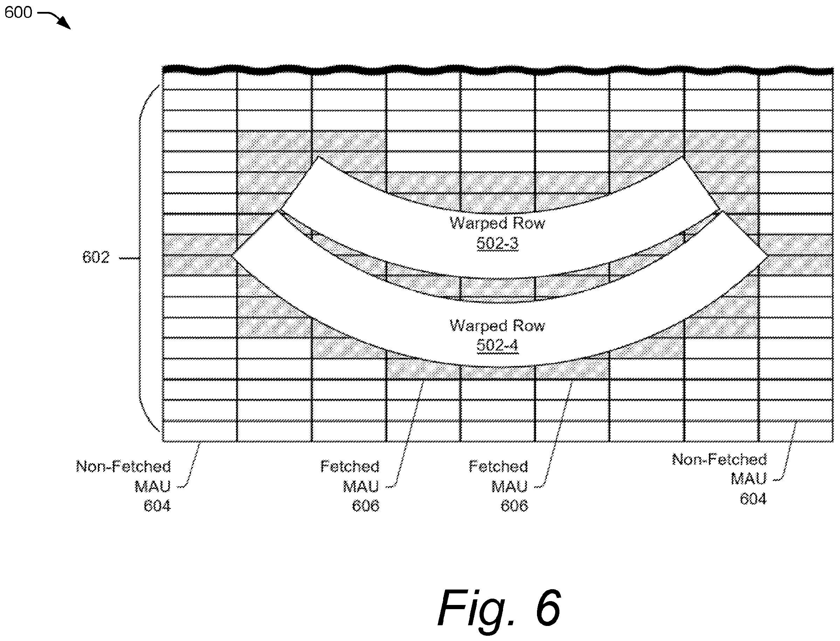

Fig. 6 illustrates, at 600 generally, an example of a COWE loading pixel information from a system memory (e.g., system memory 108 of Figs. 1 and/or 2). Fig. 6 includes the third warped row 502-3 and the fourth warped row 502-4 from Fig. 5 overlaid onto a grid 602 of MAUs, illustrated in Fig. 6 as rectangles having either solid white backgrounds or shaded backgrounds. The first warped row 502-1 and the second warped row 502-2 are omitted from Fig. 6 for clarity. The MAUs include pixel information stored in a system memory of a computing device (e.g., computing device 102 of Figs. 1 and/or 2). An MAU of the grid 602 of the MAUs may be a number of pixels tall and a number of pixels wide. The pixels may include a number of bits (e.g., eight bits) that may represent color information or gamma information of the pixels. The grid 602 of MAUs may be considered an overlay of an image sensor of a camera, for example, that stores pixel information associated with pixels of an input image. Accordingly, positions of the MAUs within the grid 602 are not significant beyond that the positions are associated with pixel information of the pixels in same positions of the input image.

The COWE may correct a warped input image (e.g., warped input image 310 of Fig. 3, warped input image 500 of Fig. 5) into a corrected output image (e.g., corrected output image 316 of Fig. 3, corrected output image 400 of Fig. 4) by fetching MAUs from the system memory. The COWE may only fetch MAUs that include pixel information of the warped input image. As illustrated, an MAU that is not fetched by the COWE is a non-fetched MAU 604 and represented by a solid white background. Non-fetched MAUs may not contain pixel information associated with pixels of a warped input image. For example, a lens of a camera may focus light onto an image sensor in a circular fashion to capture pixel information of the warped input image. The lens may focus the light onto areas of the image sensor that are not associated with the non-fetched MAUs 604. Alternatively, an MAU that is fetched by the COWE is a fetched MAU 606 and represented by a shaded background. Continuing with the present example, the fetched MAUs 606 may contain pixel information associated with the pixels of the warped input image. That is, the lens of the camera may focus the light onto areas of the image sensor that are associated with the fetched MAUs 606. Thus, the grid 602 of MAUs includes multiple non-fetched MAUs 604 and multiple fetched MAUs 606. The pixel information included in the fetched MAUs 606 may be used by the COWE to interpolate pixel information for pixels of a corrected output image.

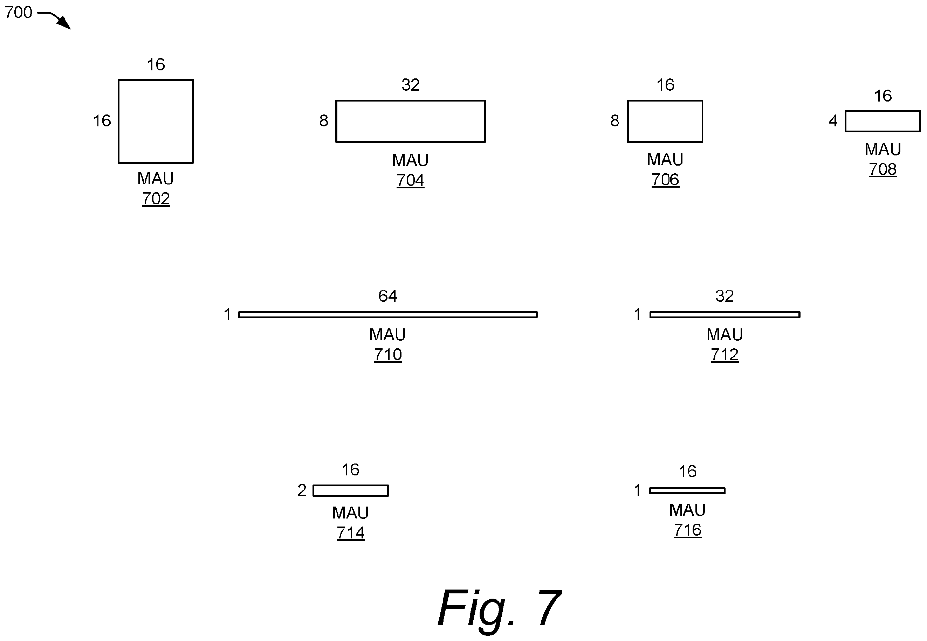

Fig. 7 illustrates, at 700 generally, various examples of MAUs (e.g., non-fetched MAUs 604 of Fig. 6, fetched MAUs 606 of Fig. 6) that a COWE may fetch from system memory (e.g., system memory 108 of Figs. 1 and/or 2). In Fig. 7, each of the MAUs is bordered by a number at a top of the MAU and a number on a left side of the MAU. These numbers represent pixel counts that define a shape (e.g., a square, a rectangle) and size, in pixels, of the MAU. A data size of the MAU, in bits (b) or bytes (B) (e.g., eight bits), may depend on specific pixel information for the pixels of the MAU and/or a format of the system memory. Data, for example, may include a color depth (e.g., 8-bit color, 16-bit color) and gamma (e.g., brightness) information, depending on a desired quality of an image (e.g., warped input image 500 of Fig. 5, corrected output image 316 of Fig. 3, corrected output image 400 of Fig. 4). A total data size of the MAU is equal to a number of the pixels in the MAU (e.g., height times width, in pixels) multiplied by a data size of each pixel.

A first MAU 702 of the various examples of MAUs is a square MAU that is 16 pixels wide and 16 bits tall for a total of 256 pixels. As an example, if the pixel information uses 8-bit color, then the first MAU 702 includes 2,048 bits (e.g., 256 B) of data. A second MAU 704 is a rectangular MAU that is 32 pixels wide and 8 pixels tall for a total of 256 pixels. As an example, if the pixel information is described using 8 bits, then the second MAU 704 includes 1,024 bits (e.g., 128 B) of data. The second MAU 704 that is 32 pixels wide and 8 pixels tall may be utilized in frame rate control (FRC) applications. A third MAU 706 is 16 pixels wide and 8 pixels tall for a total of 128 pixels. A fourth MAU 708 is 16 pixels wide and 4 pixels tall for a total of 74 pixels. A fifth MAU 710 is a rectangular MAU that is 64 pixels wide and one pixel tall. A sixth MAU 712 is half the size of the fifth MAU 710, being 32 pixels wide and one pixel tall. A seventh MAU 714 is a same size as the sixth MAU 712 but only 16 pixels wide and two pixels tall. An eighth MAU 716 is half the size of the seventh MAU 714 at 16 pixels wide and only one pixel tall.

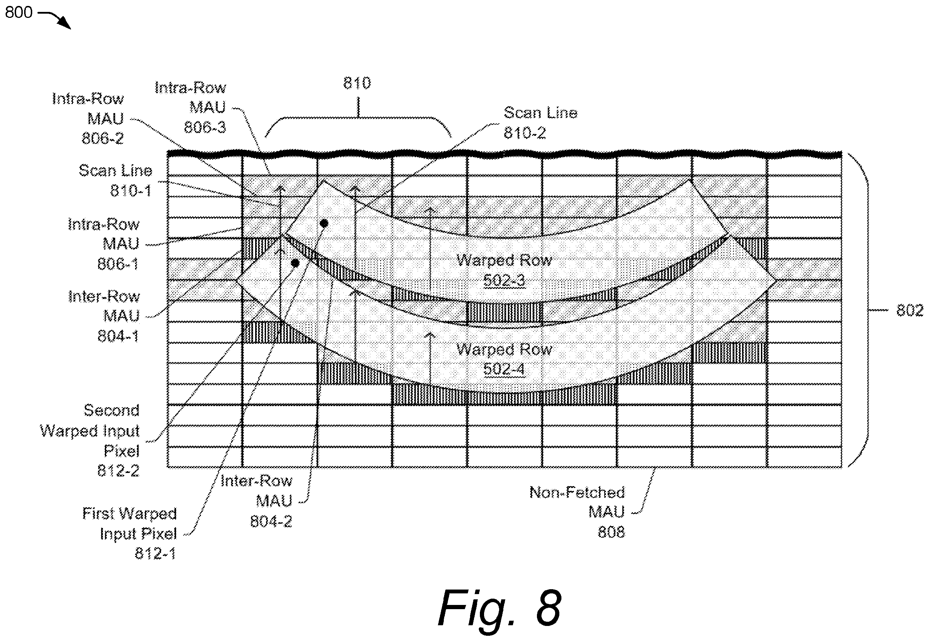

Fig. 8 illustrates, at 800 generally, an example of MAUs (e.g., any one of MAUs 702 through 716 of Fig. 7) that a COWE (e.g., COWE 114 of Figs. 1 and/or 2) loads into a cache memory (e.g., first cache memory 104 and/or second cache memory 106 of Figs. 1 and/or 2). Fig. 8 includes the third warped row 502-3 and the fourth warped row 502-4 from Fig. 5 overlaid onto a grid 802 of MAUs. As illustrated, there are three categories of MAUs, including inter-row MAUs 804, intra-row MAUs 806, and non-fetched MAUs 808 (e.g., non-fetched MAUs 604 of Fig. 6). The COWE may fetch MAUs by following a coordinate sequence (e.g., the coordinate sequence described with reference to Fig. 1).

The coordinate sequence may include an intra-row coordinate sequence that progresses from bottom to top and left to right or right to left within a row and an inter-row coordinate sequence that progresses from a topmost row to a bottommost row in a row-by-row fashion. Said differently, pixel information of the topmost row may be scanned following an intra-row coordinate sequence that is from bottom to top and left to right or right to left within the topmost row. Then, pixel information of a row adjacent and below the topmost row may be scanned using a same intra-row coordinate sequence. Pixel information of subsequent rows may be similarly scanned. Alternatively, the coordinate sequence may include an intra-row coordinate sequence that progresses from top to bottom and left to right or right to left within a row and an inter-row coordinate sequence that progresses from a bottommost row to a topmost row in a row-by-row fashion. Note that because warped rows (e.g., the third warped row 502-3 of Fig. 5) are as wide as warped input images (e.g., warped input image 500 of Fig. 5), an inter-row coordinate sequence may progress from top to bottom or bottom to top and not left to right or right to left. For clarity and brevity, Fig. 8 illustrates a coordinate sequence 810 that includes an intra-row coordinate sequence from bottom to top and left to right and an inter-row coordinate sequence that is top to bottom.

The COWE may scan pixels of the third warped row 502-3 and the fourth warped row 502-4 and fetch associated MAUs from system memory. In this example, the COWE scans pixels of the third warped row 502-3 from bottom to top, starting at the left of the third warped row 502-3, along a scan line 810-1 (e.g., a bottom to top portion of the coordinate sequence described with reference to Fig. 1). The COWE fetches, from system memory, associated MAUs, including a first inter-row MAU 804-1, a first intra-row MAU 806-1, a second intra-row MAU 806-2, and a third intra-row MAU 806-3. As illustrated, inter-row MAUs 804 are indicated by a vertically striped shading and intra-row MAUs 806 are indicated by a light shading.

The COWE may fetch the first inter-row MAU 804-1, the first intra-row MAU 806-1, the second intra-row MAU 806-2, and the third intra-row MAU 806-3 using a cache-able read command. For example, the COWE may fetch and load the first inter-row MAU 804-1 into a second cache memory (e.g., second cache memory 106 of Figs. 1 and/or 2, an L2 cache) of a computing device (e.g., computing device 102 of Figs. 1 and/or 2). Similarly, the COWE may fetch and load the first intra-row MAU 806-1, the second intra-row MAU 806-2, and the third intra-row MAU 806-3 into a first cache memory (e.g., first cache memory 104 of Figs. 1 and/or 2, an L1 cache) of the computing device. The COWE may repeat this process where a first MAU (e.g., bottom-most MAU, first inter-row MAU 804-1, second inter-row MAU 804-2) of a scan line is loaded into the second cache memory and subsequent MAUs (e.g., intra-row MAUs 806) of the scan line are loaded into the first cache memory. By so doing, the COWE may increase a speed at which a warped input image is processed into a corrected output image as detailed below.

As an example, the MAUs of the grid 802 may be eight pixels tall by 32 pixels wide for a total of 256 pixels. Further, the COWE may utilize bicubic interpolation on warped input pixels to determine a corrected output pixel. That is, the COWE may bicubically interpolate a warped input pixel into a corrected output pixel based on the warped input pixel and neighboring warped input pixels within a two-pixel radius. As the COWE scans pixels along the scan lines 810, the COWE may check for MAUs containing pixel information first in the first cache memory and then, if the MAU is not present in the first cache memory, in the second cache memory. In the present example, pixel information for the MAUs associated with the first scan line 810-1 is loaded into the first cache memory and the second cache memory. Accordingly, the COWE may access pixel information for the bicubic interpolation from either the first cache memory or the second cache memory, significantly decreasing access times for that pixel information.

As illustrated, Fig. 8 further includes a first warped input pixel 812-1 and a second warped input pixel 812-2 (not to scale). The COWE may load MAUs associated with the first warped input pixel 816-1 as the COWE scans pixels along a second scan line 810-2. As illustrated, the first warped input pixel 812-1 is at a left edge of an intra-row MAU 806, meaning that pixel information for neighboring pixels within a two-pixel radius to the left is included in the first intra-row MAU 806-1 that is stored in the first cache memory. The COWE may access that pixel information from the first cache memory, which may be significantly faster (e.g., 100 x) than accessing same pixel information from system memory. Thus, the COWE may bicubically interpolate the first warped input pixel 812-1 into a corrected output pixel using neighboring pixel information more quickly. Because the COWE may access pixel information of the intra-row MAUs 806 more often than pixel information of the inter-row MAUs 804, the pixel information of the intra-row MAUs 806 are stored in the first cache memory.

Although not shown, the COWE may continue to scan pixels within the third warped row 502-3 using the intra-row coordinate sequence that progresses from bottom to top and left to right. The COWE may scan rightmost pixel information of the third warped row 502-3 and then progress to scan (e.g., using a same intra-row coordinate sequence) pixel information within the fourth warped row 502-4. In this way, the COWE may use an inter-row coordinate sequence that progresses from top to bottom. Said differently, the COWE may scan pixel information within an upper row (e.g., the third warped row 502-3) using the intra-row coordinate sequence then scan pixel information within an adjacent row below the upper row (e.g., the fourth warped row 502-4) using the intra-row coordinate sequence.

The second warped input pixel 812-2, as illustrated, is a top-most pixel of an intra-row MAU 806 within the fourth warped row 502-4. Accordingly, to process the second warped input pixel 812-2 into a corrected output pixel, the COWE must bicubically interpolate pixel information for neighboring pixels within a two-pixel radius. In this example, the COWE may access neighboring pixel information above the second warped input pixel 812-2 within the second cache memory. This is because the first inter-row MAU 804-1 was loaded previously into the second cache memory when the COWE scanned pixel information along the first scan line 810-1. Thus, the COWE may process the second warped input pixel 812-2 into a corrected output pixel more quickly (e.g., 10 x) than if the COWE accessed same neighboring pixel information from system memory. Although not shown, the COWE may similarly process another warped input pixel into another corrected output pixel using the pixel information of a second inter-row MAU 804-2 that may be stored in the second cache memory.

Further, due to the coordinate sequence, the COWE may optimize the first cache memory and the second cache memory. The optimization of the first cache memory may be described by Equation 1.

$$L1_{size} = \text{ceiling}((r + 4 + (s - 1)) / s) * \text{ceiling}((2 + 4 + (L - 1)) / l) * s * L \qquad (1)$$

In Equation 1, $L1_{size}$ is the size of the first cache memory, $r$ is the height of a corrected output row, $s \times L$ is the MAU shape where s is a short side (e.g., height) and $L$ is a long side (e.g., width), and 4 is the bicubic interpolation window size. Similarly, the optimization of the second cache memory may be described by Equation 2.

$$L2_{size} = \text{ceiling}((b + 2 + (h - 1)) / h) * h * W + \text{ceiling}((b + 2 + (w - 1)) / w) * w * H \qquad (2)$$

In Equation 2, $L2_{size}$ is the size of the first cache memory, $b$ is a bottom line of pixels (e.g., bottom-most pixels within inter-row MAUs 812), $2$ is an interpolation kernel extension, $h$ x $w$ is the MAU shape where $h$ is the height (e.g., eight pixels) and $w$ is the width (e.g., 32 pixels), and $H$ x $W$ is a corrected output image shape where $H$ is the height (e.g., 1,080 pixels) and $W$ is the width (e.g., 1,920 pixels).

As an example, the MAU shape may be eight pixels tall by 32 pixels wide, the corrected output image may be 1,080 pixels tall by 1,920 pixels wide, each row dividing the corrected output image may be 108 pixels tall, and each pixel (e.g., color and gamma) may be described by eight bits. Continuing with the present example, the size of the first cache memory may be optimized to 7,680 pixels or 7,680 B (e.g., 7,680 pixels x 8 bits per pixel). Similarly, the size of the second cache memory may be optimized to 99,840 pixels or 99,840 B (e.g., 99,840 pixels x 8 bits per pixel).

### Example Method

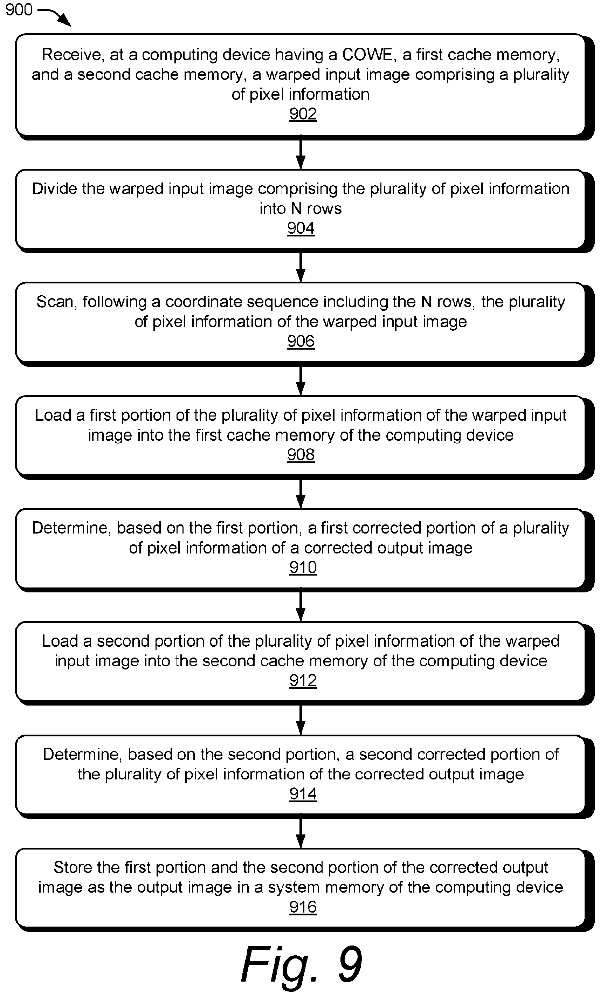

Fig. 9 depicts an example method 900 that a COWE may perform on a warped input image (e.g., warped input image 310 of Fig. 3). At 902, a computing device having the COWE, a first cache memory (e.g., first cache memory 104 of Figs. 1 and/or 2), and a second cache memory (e.g., second cache memory 106 of Figs. 1 and/or 2) receives a warped input image comprising a plurality of pixel information. The first cache memory may be an L1 cache that is approximately 100 times faster than system memory (e.g., DRAM, double data rate (DDR) DRAM). The second cache memory may be an L2 cache that is approximately 10 times faster than system memory. The warped input image may be distorted from lens (e.g., of a camera) distortion or an instability (e.g., unsteadiness, long exposure time) during capture of the warped input image.

At 904, the COWE divides the warped input image comprising the plurality of pixel information into N rows. N may be a positive integer, including four, eight, 10, 12, 16, 40, and so forth. The plurality of pixel information may be included in an MAU of a specific size, in pixels, depending on computing capabilities of the computing device and/or a format of system memory of the computing device.

At 906, the COWE scans, following a coordinate sequence including the N rows, the plurality of pixel information of the warped input image. The COWE may scan pixels by accessing MAUs associated with the pixels from system memory of the computing device. The COWE may access individual MAUs or multiple MAUs, for example, from the system memory. The coordinate sequence may include an intra-row coordinate sequence that is at least one of bottom to top and left to right or bottom to top and right to left, as well as an inter-row coordinate sequence that is top to bottom. Alternatively, the coordinate sequence may include an intra-row coordinate sequence that is at least one of top to bottom and left to right or top to bottom and right to left, as well as an inter-row coordinate sequence that is bottom to top.

At 908, the COWE loads a first portion of the plurality of pixel information of the warped input image into the first cache memory of the computing device. The first portion may include one or more intra-row MAUs that the COWE accesses from the system memory of the computing device.

At 910, the COWE determines, based on the first portion of the plurality of pixel information of the warped input image stored in the first cache memory, a first corrected portion of a plurality of pixel information of a corrected output image. The COWE may determine the first corrected portion by determining a location of the corrected portion of the plurality of pixel information in the corrected output image using a transformation model. The transformation model may be a predetermined transformation function based on, for example, a curvature of a lens of a camera that captures the warped input image. Alternatively or additionally, the transformation model may be based on sensor data (e.g., accelerometer data) captured contemporaneously with the warped input image. The sensor data may be usable by the COWE to determine the first corrected portion via an EIS process.

At 912, the COWE loads a second portion of the plurality of pixel information of the warped input image into the second cache memory of the computing device. The second portion may include one or more inter-row MAUs that the COWE accesses from the system memory of the computing device.

At 914, the COWE determines, based on the second portion of the plurality of pixel information of the warped input image stored in the second cache memory, a second corrected portion of the plurality of pixel information of the corrected output image. The COWE may determine the second corrected portion using a transformation model and/or sensor data as described above.

At 916, the COWE stores the first portion and the second portion of the plurality of pixel information of the corrected output image as the output image in the system memory of the computing device. The first portion and the second portion can include subsequent first portions and second portions of the corrected output image that the COWE determines by following the coordinate sequence to process all portions of the warped input image. The system memory may be a DDR DRAM or SSD of the computing device.

By performing the example method 900 described above, the COWE may correct a warped input image into a corrected output image more quickly using the first cache memory and the second cache memory than if the COWE used only the system memory. Further, the COWE may optimize sizes of the first cache memory and the second cache memory by following the coordinate sequence described above. By so doing, the COWE improves a user experience of the computing device through smaller physical size and higher power efficiencies of the first and second cache memories.

**Claims**

1. A method (900) comprising:

    receiving (902), at a computing device having a cache-optimized warp engine (114), a first cache memory (104), and a second cache memory (106), a warped input image (310, 500) comprising a plurality of pixel information;
    dividing (904), by the cache-optimized warp engine, the warped input image comprising the plurality of pixel information into N warped rows;
    **characterized by**:

    scanning, by the cache-optimized warp engine and following a coordinate sequence including the N warped rows, the plurality of pixel information of the warped input image by accessing a plurality of memory access units, MAUs, according to the coordinate sequence, the MAUs including inter-row MAUs (804) and intra-row MAUs (806), the coordinate sequence comprising:

        an intra-row coordinate sequence that is one of:

            bottom to top and left to right; or
            bottom to top and right to left; and

        an inter-row coordinate sequence that is top to bottom; or
        an intra-row coordinate sequence that is one of:

            top to bottom and left to right; or
            top to bottom and right to left; and

        an inter-row coordinate sequence that is bottom to top;

    loading (908), by the cache-optimized warp engine, a first portion of the plurality of pixel information of the warped input image into the first cache memory of the computing device, said first portion comprising a sequence of one or more intra-row MAUs according to the coordinate sequence;
    determining (910), by the cache-optimized warp engine and based on the first portion of the plurality of pixel information of the warped input image stored in the first cache memory, a first corrected portion of a plurality of pixel information of a corrected output image (316, 400);
    loading (912), by the cache-optimized warp engine, a second portion of the plurality of pixel information of the warped input image into the second cache memory of the computing device, said second portion comprising a sequence of one or more inter-row MAUs according to the coordinate sequence;
    determining (914), by the cache-optimized warp engine and based on the second portion of the plurality of pixel information of the warped input image stored in the second cache memory, a second corrected portion of the plurality of pixel information of the corrected output image; and
    storing (916), by the cache-optimized warp engine, the first portion and the second portion of the plurality of pixel information of the corrected output image as the output image in a system memory (108) of or associated with the computing device.

2. The method of claim 1, wherein:

    the warped input image is W pixels wide and T pixels tall;
    W is an integer greater than one; and
    T is an integer greater than one.

**3.** The method of claim 2, wherein:

> each row of the N rows is W pixels wide; and
> each row of the N rows is an integer division of T pixels tall.

**4.** The method of any one of the preceding claims, wherein the coordinate sequence comprises an intra-row coordinate sequence that is bottom to top and left to right and an inter-row coordinate sequence that is top to bottom.

**5.** The method of any one of the preceding claims, wherein:

> the first cache is an L1 cache of the cache-optimized warp engine; and
> the second cache is an L2 cache of the cache-optimized warp engine; or
> the second cache is a system-level cache of a system-on-a-chip of the computing device.

**6.** The method of any one of the preceding claims, wherein at least one of:

> determining the first portion of the plurality of pixel information of the corrected output image uses an arbitrary transform function; or
> determining the second portion of the plurality of pixel information of the corrected output image uses the arbitrary transform function.

**7.** The method of any one of the preceding claims, wherein determining the first or second portion of the plurality of pixel information of the corrected output image uses at least one of:

> piecewise interpolation;
> linear interpolation;
> polynomial interpolation;
> spline interpolation; or
> mimetic interpolation.

**8.** The method of any one of the preceding claims, wherein determining the first or second portion of the plurality of pixel information of the corrected output image uses at least one of:

> lens distortion;
> geographic distortion;
> motion compensation;
> electronic image stabilization;
> rolling shutter correction; or
> camera calibration.

**9.** The method of any one of the preceding claims, wherein
scanning the plurality of pixel information of the warped input image includes scanning the plurality of MAUs.

**10.** The method of claim 1, wherein:

> the one or more intra-row MAUs is L pixels long and S pixels wide;
> L is an integer greater than one; and
> S is an integer greater than one.

**11.** The method of claim 10, wherein S is less than L.

**12.** The method of any one of the preceding claims, wherein:

> a pixel of the warped input image comprises M bits; and
> M is at least one of:

>> an integer greater than or equal to one;
>> four bits;

eight bits;
16 bits;
32 bits; or
64 bits.

**13.** The method of any one of the preceding claims, wherein at least one of:

the plurality of pixel information of the warped input image comprises:

location information;
gamma information; or
color information; or

the plurality of pixel information of the corrected output image comprises:

location information;
gamma information; or
color information.

**14.** A computing device comprising:

a first cache memory;
a second cache memory;
system memory;
at least one processor; and
computer-readable media storing instructions that, when executed by the at least one processor, cause the at least one processor to implement a cache-optimized warp engine utilizing the first cache, the second cache, and the system memory by performing the method of any one of claims 1-13.

**15.** Computer-readable media comprising instructions that, when executed by at least one processor, cause the at least one processor to perform the method of any one of claims 1-13.

**Patentansprüche**

**1.** Verfahren (900), umfassend:

Empfangen (902), an einer Rechenvorrichtung, die eine cache-optimierte Warp-Engine (114), einen ersten Cachespeicher (104) und einen zweiten Cachespeicher (106) aufweist, eines verzerrten Eingabebildes (310, 500), das eine Mehrzahl von Pixelinformationen umfasst;
Teilen (904), durch die cache-optimierte Warp-Engine, des verzerrten Eingabebildes, das die Mehrzahl von Pixelinformationen umfasst, in N verzerrte Zeilen;
**gekennzeichnet durch**:
Abtasten, durch die cache-optimierte Warp-Engine und einer Koordinatensequenz folgend, die die N verzerrten Zeilen beinhaltet, der Mehrzahl von Pixelinformationen des verzerrten Eingabebildes durch Zugreifen auf eine Mehrzahl von Speicherzugriffseinheiten, MAUs, gemäß der Koordinatensequenz, wobei die MAUs MAUs (804) zwischen Zeilen und MAUs (806) in Zeilen beinhalten, wobei die Koordinatensequenz umfasst:
eine Koordinatensequenz in Zeilen, die eines von Folgendem ist:

unten nach oben und links nach rechts; oder
unten nach oben und rechts nach links; und
eine Koordinatensequenz zwischen Zeilen, die oben nach unten ist; oder
eine Koordinatensequenz in Zeilen, die eines von Folgendem ist:

oben nach unten und links nach rechts; oder
oben nach unten und rechts nach links; und
eine Koordinatensequenz zwischen Zeilen, die unten nach oben ist;
Laden (908), durch die cache-optimierte Warp-Engine, eines ersten Teils der Mehrzahl von Pixelinformationen des verzerrten Eingabebildes in den ersten Cachespeicher der Rechenvorrichtung, wobei der erste Teil eine Sequenz von einer oder mehreren MAUs in Zeilen gemäß der Koordinatensequenz umfasst;

Bestimmen (910), durch die cache-optimierte Warp-Engine und basierend auf dem ersten Teil der Mehrzahl von Pixelinformationen des verzerrten Eingabebildes, der in dem ersten Cachespeicher gespeichert ist, eines ersten korrigierten Teils einer Mehrzahl von Pixelinformationen eines korrigierten Ausgabebildes (316, 400);

Laden (912), durch die cache-optimierte Warp-Engine, eines zweiten Teils der Mehrzahl von Pixelinformationen des verzerrten Eingabebildes in den zweiten Cachespeicher der Rechenvorrichtung, wobei der zweite Teil eine Sequenz von einer oder mehreren MAUs zwischen Zeilen gemäß der Koordinatensequenz umfasst;

Bestimmen (914), durch die cache-optimierte Warp-Engine und basierend auf dem zweiten Teil der Mehrzahl von Pixelinformationen des verzerrten Eingabebildes, der in dem zweiten Cachespeicher gespeichert ist, eines zweiten korrigierten Teils der Mehrzahl von Pixelinformationen des korrigierten Ausgabebildes; und

Speichern (916), durch die cache-optimierte Warp-Engine, des ersten Teils und des zweiten Teils der Mehrzahl von Pixelinformationen des korrigierten Ausgabebildes als das Ausgabebild in einem Systemspeicher (108) der Rechenvorrichtung oder einem der Rechenvorrichtung zugeordneten Systemspeicher.

2. Verfahren nach Anspruch 1, wobei:

das verzerrte Eingabebild W Pixel breit und T Pixel hoch ist; W eine Ganzzahl größer als eins ist; und T eine Ganzzahl größer als eins ist.

3. Verfahren nach Anspruch 2, wobei:

jede Zeile der N Zeilen W Pixel breit ist; und
jede Zeile der N Zeilen eine Ganzzahldivision von T Pixeln hoch ist.

4. Verfahren nach einem der vorhergehenden Ansprüche, wobei die Koordinatensequenz eine Koordinatensequenz in Zeilen, die unten nach oben und links nach rechts ist, und eine Koordinatensequenz zwischen Zeilen, die oben nach unten ist, umfasst.

5. Verfahren nach einem der vorhergehenden Ansprüche, wobei:

der erste Cache ein L1 Cache der cache-optimierten Warp-Engine ist; und
der zweite Cache ein L2 Cache der cache-optimierten Warp-Engine ist; oder
der zweite Cache ein Cache auf Systemebene eines System-on-a-Chip der Rechenvorrichtung ist.

6. Verfahren nach einem der vorhergehenden Ansprüche, wobei mindestens eines von:

Bestimmen des ersten Teils der Mehrzahl von Pixelinformationen des korrigierten Ausgabebildes eine beliebige Transformationsfunktion verwendet; oder
Bestimmen des zweiten Teils der Mehrzahl von Pixelinformationen des korrigierten Ausgabebildes die beliebige Transformationsfunktion verwendet.

7. Verfahren nach einem der vorhergehenden Ansprüche, wobei Bestimmen des ersten oder zweiten Teils der Mehrzahl von Pixelinformationen des korrigierten Ausgabebildes mindestens eines von Folgendem verwendet:

stückweiser Interpolation;
linearer Interpolation;
Polynominterpolation;
Spline-Interpolation; oder
mimetischer Interpolation.

8. Verfahren nach einem der vorhergehenden Ansprüche, wobei Bestimmen des ersten oder zweiten Teils der Mehrzahl von Pixelinformationen des korrigierten Ausgabebildes mindestens eines von Folgendem verwendet:

Linsenverzerrung;
geografischer Verzerrung;
Bewegungskompensation;
elektronischer Bildstabilisierung;
Rolling-Shutter-Korrektur; oder
Kamerakalibrierung.

9. Verfahren nach einem der vorhergehenden Ansprüche, wobei Abtasten der Mehrzahl von Pixelinformationen des verzerrten Eingabebildes Abtasten der Mehrzahl von MAUs beinhaltet.

10. Verfahren nach Anspruch 1, wobei:

die eine oder die mehreren MAUs in Zeilen L Pixel lang und S Pixel breit sind;
L eine Ganzzahl größer als eins ist; und
S eine Ganzzahl größer als eins ist.

11. Verfahren nach Anspruch 10, wobei S kleiner als L ist.

12. Verfahren nach einem der vorhergehenden Ansprüche, wobei:

ein Pixel des verzerrten Eingabebildes M Bits umfasst; und
M mindestens eines von Folgendem ist:

eine Ganzzahl größer als oder gleich eins;
vier Bits;
acht Bits;
16 Bits;
32 Bits; oder
64 Bits.

13. Verfahren nach einem der vorhergehenden Ansprüche, wobei mindestens eines von:
der Mehrzahl von Pixelinformationen des verzerrten Eingabebildes Folgendes umfasst:

Positionsinformationen;
Gammainformationen; oder
Farbinformationen; oder
der Mehrzahl von Pixelinformationen des korrigierten Ausgabebildes Folgendes umfasst:

Positionsinformationen;
Gammainformationen; oder
Farbinformationen.

14. Rechenvorrichtung, umfassend:

einen ersten Cachespeicher;
einen zweiten Cachespeicher;
einen Systemspeicher;
mindestens einen Prozessor; und
ein computerlesbares Medium, das Anweisungen speichert, die, wenn sie durch den mindestens einen Prozessor ausgeführt werden, den mindestens einen Prozessor veranlassen, durch Durchführen des Verfahrens nach einem der Ansprüche 1-13 eine cache-optimierte Warp-Engine unter Nutzung des ersten Cache, des zweiten Cache und des Systemspeichers zu implementieren.

15. Computerlesbares Medium, umfassend Anweisungen, die, wenn sie durch mindestens einen Prozessor ausgeführt werden, den mindestens einen Prozessor veranlassen, das Verfahren nach einem der Ansprüche 1-13 durchzuführen.

**Revendications**

1. Procédé (900) comprenant :

   la réception (902), au niveau d'un dispositif informatique ayant un moteur de déformation à optimisation du cache (114), une première mémoire cache (104) et une seconde mémoire cache (106), d'une image d'entrée déformée (310, 500) comprenant une pluralité d'informations de pixels ;
   la division (904), par le moteur de déformation à optimisation du cache, de l'image d'entrée déformée comprenant la pluralité d'informations de pixel en N lignes déformées ;
   **caractérisé par** :
   le balayage, par le moteur de déformation à optimisation du cache et à la suite d'une séquence de coordonnées comportant les N lignes déformées, de la pluralité d'informations de pixel de l'image d'entrée déformée en accédant à une pluralité d'unités d'accès mémoire, MAU, selon la séquence de coordonnées, les MAU comportant des MAU inter-lignes (804) et des MAU intra-ligne (806), la séquence de coordonnées comprenant :
   une séquence de coordonnées intra-ligne qui est l'une des suivantes :

      de bas en haut et de gauche à droite ; ou
      de bas en haut et de droite à gauche ; et
      une séquence de coordonnées inter-ligne allant de haut en bas ; ou
      une séquence de coordonnées intra-ligne qui est l'une des suivantes :

      de haut en bas et de gauche à droite ; ou
      de haut en bas et de droite à gauche ; et
      une séquence de coordonnées inter-ligne allant de bas en haut ;
      le chargement (908), par le moteur de déformation à optimisation du cache, d'une première partie de la pluralité d'informations de pixel de l'image d'entrée déformée dans la première mémoire cache du dispositif informatique, ladite première partie comprenant une séquence d'une ou plusieurs MAU intra-ligne selon la séquence de coordonnées ;
      la détermination (910), par le moteur de déformation à optimisation du cache et sur la base de la première partie de la pluralité d'informations de pixel de l'image d'entrée déformée stockée dans la première mémoire cache, d'une première partie corrigée d'une pluralité d'informations de pixel d'une image de sortie corrigée (316, 400) ;
      le chargement (912), par le moteur de déformation à optimisation du cache, d'une seconde partie de la pluralité d'informations de pixel de l'image d'entrée déformée dans la seconde mémoire cache du dispositif informatique, ladite seconde partie comprenant une séquence d'une ou plusieurs MAU inter-ligne selon la séquence de coordonnées ;
      la détermination (914), par le moteur de déformation à optimisation du cache et sur la base de la seconde partie de la pluralité d'informations de pixel de l'image d'entrée déformée stockée dans la seconde mémoire cache, d'une seconde partie corrigée de la pluralité d'informations de pixel de l'image de sortie corrigée ; et
      le stockage (916), par le moteur de déformation à optimisation du cache, de la première partie et de la seconde partie de la pluralité d'informations de pixel de l'image de sortie corrigée en tant qu'image de sortie dans une mémoire système (108) appartenant ou étant associé au dispositif informatique.

2. Procédé selon la revendication 1, dans lequel :

   l'image d'entrée déformée a une largeur de W pixels et une hauteur de T pixels ;
   W est un entier supérieur à un ; et
   T est un entier supérieur à un.

3. Procédé selon la revendication 2, dans lequel :

   chaque ligne des N lignes a une largeur de W pixels ; et
   chaque ligne des N lignes est une division entière de T pixels de hauteur.

4. Procédé selon l'une quelconque des revendications précédentes, dans lequel la séquence de coordonnées comprend une séquence de coordonnées intra-ligne allant de bas en haut et de gauche à droite et une séquence de coordonnées inter-ligne allant de haut en bas.

**5.** Procédé selon l'une quelconque des revendications précédentes, dans lequel :

le premier cache est un cache L1 du moteur de déformation à optimisation du cache ; et
le second cache est un cache L2 du moteur de déformation à optimisation du cache ; ou
le second cache est un cache de niveau système d'un système sur une puce du dispositif informatique.

**6.** Procédé selon l'une quelconque des revendications précédentes, dans lequel au moins l'un de :

la détermination de la première partie de la pluralité d'informations de pixel de l'image de sortie corrigée utilise une fonction de transformation arbitraire ; ou
de la détermination de la seconde partie de la pluralité d'informations de pixel de l'image de sortie corrigée utilise la fonction de transformation arbitraire.

**7.** Procédé selon l'une quelconque des revendications précédentes, dans lequel la détermination de la première ou de la seconde partie de la pluralité d'informations de pixel de l'image de sortie corrigée utilise au moins l'un des éléments suivants :

une interpolation par morceaux ;
une interpolation linéaire ;
une interpolation polynomiale ;
une interpolation spline ; ou
une interpolation mimétique.

**8.** Procédé selon l'une quelconque des revendications précédentes, dans lequel la détermination de la première ou de la seconde partie de la pluralité d'informations de pixel de l'image de sortie corrigée utilise au moins l'un des éléments suivants :

une distorsion de l'objectif ;
une distorsion géographique ;
une compensation de mouvement ;
une stabilisation d'image électronique ;
une correction d'obturateur roulant ; ou
un calibrage de caméra.

**9.** Procédé selon l'une quelconque des revendications précédentes, dans lequel le balayage de la pluralité d'informations de pixel de l'image d'entrée déformée comporte le balayage de la pluralité de MAU.

**10.** Procédé selon la revendication 1, dans lequel :

les une ou plusieurs MAU intra-ligne ont une longueur de L pixels et une largeur de S pixels ;
L est un entier supérieur à un ; et
S est un entier supérieur à un.

**11.** Procédé selon la revendication 10, dans lequel S est inférieur à L.

**12.** Procédé selon l'une quelconque des revendications précédentes, dans lequel :

un pixel de l'image d'entrée déformée comprend M bits ; et
M est au moins l'un des suivants :

un entier supérieur ou égal à un ;
quatre bits ;
huit bits ;
16 bits ;
32 bits ; ou
64 bits.

13. Procédé selon l'une quelconque des revendications précédentes, dans lequel au moins l'un de :
la pluralité d'informations de pixel de l'image d'entrée déformée comprend :

des informations d'emplacement ;
des informations gamma ; ou
des informations de couleur ; ou
de la pluralité d'informations de pixel de l'image de sortie corrigée comprend :

des informations d'emplacement ;
des informations gamma ; ou
des informations de couleur.

14. Dispositif informatique comprenant :

une première mémoire cache ;
une seconde mémoire cache ;
une mémoire système ;
au moins un processeur ; et
des supports lisibles par ordinateur stockant des instructions qui, lorsqu'elles sont exécutées par l'au moins un processeur, amènent l'au moins un processeur à mettre en œuvre un moteur de déformation à optimisation du cache utilisant le premier cache, le second cache et la mémoire système en réalisant le procédé selon l'une quelconque des revendications 1 à 13.

15. Supports lisibles par ordinateur comprenant des instructions qui, lorsqu'elles sont exécutées par au moins un processeur, amènent l'au moins un processeur à réaliser le procédé selon l'une quelconque des revendications 1 à 13.

100 —

Computing Device
102

First Cache Memory
104

Second Cache Memory
106

System Memory
108

Processor
110

Display
112

COWE
114

116

112-1

112-2

118

118

Fig. 1

200 →

**Computing Device**
**102**

First Cache Memory
104

Second Cache Memory
106

System Memory
108

CRM
202

Memory Media
204

Storage Media
206

OS
208

Applications
210

Processor
110

Display
112

COWE
114

Sensors
212

202a

202b

202c

202d

202e

202f

202g

202h

202i

*Fig. 2*

*Fig. 3*

EP 4 529 637 B1

*Fig. 4*

EP 4 529 637 B1

500

**Fig. 5**

Fig. 6

EP 4 529 637 B1

700

16

16

MAU
702

32

8

MAU
704

16

8

MAU
706

16

4

MAU
708

64

1

MAU
710

32

1

MAU
712

16

2

MAU
714

16

1

MAU
716

*Fig. 7*

*Fig. 8*

900 ⟍

Receive, at a computing device having a COWE, a first cache memory, and a second cache memory, a warped input image comprising a plurality of pixel information
902

Divide the warped input image comprising the plurality of pixel information into N rows
904

Scan, following a coordinate sequence including the N rows, the plurality of pixel information of the warped input image
906

Load a first portion of the plurality of pixel information of the warped input image into the first cache memory of the computing device
908

Determine, based on the first portion, a first corrected portion of a plurality of pixel information of a corrected output image
910

Load a second portion of the plurality of pixel information of the warped input image into the second cache memory of the computing device
912

Determine, based on the second portion, a second corrected portion of the plurality of pixel information of the corrected output image
914

Store the first portion and the second portion of the corrected output image as the output image in a system memory of the computing device
916

*Fig. 9*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015007426 A1
- US 2018260931 A

- WO 2020239211 A1

**Non-patent literature cited in the description**

- **YOUNG-GEUN KIM et al.** System-on-Chip Solution of Video Stabilization for CMOS Image Sensors in Hand-Held Devices. *IEEE TRANSACTIONS ON CIRCUITS AND SYSTEMS FOR VIDEO TECHNOLOGY*